(19) Europäisches Patentamt
European Patent Office
Office européen des brevets

(11) **EP 4 167 323 A1**

(12) **EUROPEAN PATENT APPLICATION**
published in accordance with Art. 153(4) EPC

(43) Date of publication:
**19.04.2023 Bulletin 2023/16**

(21) Application number: **21845819.8**

(22) Date of filing: **26.07.2021**

(51) International Patent Classification (IPC):
**H01M 4/525** (2010.01)   **H01M 4/505** (2010.01)
**C01G 53/00** (2006.01)

(52) Cooperative Patent Classification (CPC):
**C01G 53/00; H01M 4/505; H01M 4/525;**
Y02E 60/10

(86) International application number:
**PCT/KR2021/009609**

(87) International publication number:
**WO 2022/019726 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.07.2020 KR 20200092347**

(71) Applicant: **Lg Chem, Ltd.**
**Seoul 07336 (KR)**

(72) Inventors:
• **KIM, Na Ri**
**Daejeon 34122 (KR)**
• **PARK, Young Su**
**Daejeon 34122 (KR)**
• **LEE, Woo Ram**
**Daejeon 34122 (KR)**
• **CHOI, Sang Soon**
**Daejeon 34122 (KR)**
• **PARK, Hyun Ah**
**Daejeon 34122 (KR)**
• **KIM, Hyun Uk**
**Daejeon 34122 (KR)**
• **KIM, Woo Hyun**
**Daejeon 34122 (KR)**
• **CHOI, Hwan Young**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL PRECURSOR AND MANUFACTURING METHOD THEREFOR**

(57)    The present invention relates to a positive electrode active material precursor and a method of preparing the same, the positive electrode active material precursor including: a first region formed in the center of a particle of the positive electrode active material precursor and having a composition represented by Chemical Formula 1 or 2; and a second region formed on the first region and having a composition represented by Chemical Formula 4.

region formed in the center of a particle of the positive electrode active material prec having a composition represented by Chemical Formula 1 or 2; and a second region f the first region and having a composition represented by Chemical Formula 3 or 4.

## Description

**Technical Field**

**Cross-Reference to Related Application**

This application claims priority to and the benefit of Korean Patent Application No. 10-2020-0092347, filed on July 24, 2020, the disclosure of which is incorporated herein by reference in its entirety.

**Technical Field**

The present invention relates to a positive electrode active material precursor having a novel structure and a method of preparing the same.

**Background Art**

As technology development and demand for mobile devices and electric vehicles increase, the demand for secondary batteries as an energy source is rapidly increasing. Among secondary batteries, a lithium secondary battery having high energy density and voltage, a long cycle life, and a low self-discharge rate has been commercialized and widely used.

Lithium transition metal composite oxides are used as a positive electrode active material for a lithium secondary battery, and among them, lithium cobalt composite metal oxides such as $LiCoO_2$, which have high operating voltage and excellent capacity characteristics, are mainly used. However, $LiCoO_2$ has very poor thermal characteristics due to crystal structure destabilization induced by delithiation. Also, because $LiCoO_2$ is expensive, there is limit to its mass use as a power source in fields such as electric vehicles.

Thus, as a material for replacing $LiCoO_2$, lithium manganese-based oxides ($LiMnO_2$, $LiMn_2O_4$, etc.), lithium iron phosphate compounds ($LiFePO_4$, etc.), or lithium nickel-based oxides ($LiNiO_2$, etc.) have been developed. Among them, research and development of lithium nickel-based oxides, in which a large capacity battery may be easily implemented due to a high reversible capacity of about 200 mAh/g, have been more actively conducted. However, $LiNiO_2$ has inferior thermal stability compared to $LiCoO_2$ and when an internal short circuit occurs due to external pressure in a charged state, the positive electrode active material itself is decomposed, resulting in rupture and ignition of a battery. Accordingly, as a method for improving low thermal stability while maintaining the excellent reversible capacity of $LiNiO_2$, a lithium composite transition metal oxide, in which part of nickel is substituted with cobalt, manganese, and/or aluminum, has been developed.

Meanwhile, as demand for secondary batteries with high energy density increases in recent years, nickel-rich lithium composite transition metal oxides having a high nickel content have been developed in order to increase the capacity of a positive electrode active material. In the case of nickel-rich lithium composite transition metal oxides, although there is an advantage that the capacity is greatly expressed, because the amount of oxidation of nickel increases in the same voltage band due to the high content of nickel, and thus lithium ion movement increases, as a result, structural stability of the positive electrode active material is deteriorated, resulting in deterioration of a long-term lifespan and thermal stability.

Therefore, there is a demand for the development of a positive electrode active material having high capacity characteristics and excellent physical properties such as lifespan characteristics and thermal stability.

**Disclosure**

**Technical Problem**

The present invention has been made to solve the above problems, and provides a positive electrode active material precursor having a novel structure capable of realizing excellent capacity characteristics, and a method of preparing the same.

**Technical Solution**

The present invention provides a positive electrode active material precursor including: a first region formed in the center of a particle of the positive electrode active material precursor and having a composition represented by Chemical Formula 1 or 2 below; and a second region formed on the first area and having a composition represented by Chemical Formula 3 or 4 below.

[Chemical Formula 1]   $[Ni_aCo_bM^1c](OH)_2$

[Chemical Formula 2]   $[Ni_aCo_bM^1_c]O·OH$

In Chemical Formulae 1 and 2, $M^1$ is at least one selected from the group consisting of B, Mg, Ca, Al, Ti, V, Cr, Fe, Zn, Ga, Y, Zr, Nb, Mo, Ta, and W, and $0<a<1$, $0<b<1$, $0\leq c<0.5$, and $a+b+c=1$, and

[Chemical Formula 3]   $[Mn_dM^2_e](OH)_2$

[Chemical Formula 4]   $[Mn_dM^2_e]O·OH$

In Chemical Formulae 3 and 4, $M^2$ is at least one selected from the group consisting of B, Mg, Ca, Al, Ti, V, Cr, Fe, Zn, Ga, Y, Zr, Nb, Mo, Ta, and W, and $0.5<d\leq1$, $0\leq e<0.5$, and $d+e=1$.

Also, the present invention provides a method of preparing a positive electrode active material precursor according to the present invention, the method including: a first step of forming a nickel cobalt-based composite metal hydroxide or oxyhydroxide particle through a precipitation reaction by mixing a first metal solution containing nickel and cobalt, an ammonium cation complex forming agent, and a basic compound; and a second step of forming a manganese-based metal hydroxide or oxyhydroxide on the nickel cobalt-based composite metal hydroxide or oxyhydroxide particle through a precipitation reaction by mixing a solution including the nickel cobalt-based composite metal hydroxide or oxyhydroxide particle with a second metal solution containing manganese, an ammonium cation complex forming agent, and a basic compound.

Also, the present invention provides a positive electrode active material that is a calcined product of the positive electrode active material precursor according to the present invention and a lithium raw material.

**Advantageous Effects**

A positive electrode active material precursor of the present invention includes: a first region in which nickel, cobalt, and manganese are not uniformly distributed in the positive electrode active material precursor and which includes a nickel cobalt-based composite metal hydroxide or oxyhydroxide; and a second region formed on the first region and including a manganese-based metal hydroxide or oxyhydroxide, and thus, has high capacity characteristics.

According to a preparation method of the present invention, nickel and cobalt, which have similar precipitation reaction conditions, are first mixed and precipitated, and manganese, which has the most different precipitation reaction conditions, is separated therefrom to perform the precipitation reaction, thereby improving reaction efficiency.

Also, according to a preparation method of the present invention, a transition metal composition of a first region formed in the center of a particle of a positive electrode active material precursor and a second region formed on the first region may be easily adjusted, and thus, a positive electrode active material precursor optimized to obtain desired physical properties can be prepared.

**Brief Description of Drawings**

FIG. 1 is a diagram showing an embodiment of a positive electrode active material precursor according to the present invention.

FIG. 2(a) is a scanning electron microscope (SEM) image of a particle having a $Ni_{0.95}Co_{0.05}(OH)_2$ composition in Example 1, and FIG. 2(b) is a SEM image of a positive electrode active material precursor in which a second region having a $Mn(OH)_2$ composition of Example 1 is formed.

**Best Mode of the Invention**

Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.

It should be further understood that the term "include," "comprise," or "have" used in the present specification specifies the presence of stated features, numbers, steps, elements, or combinations thereof, but does not preclude the presence or addition of one or more other features, numbers, steps, elements, or combinations thereof.

In the present specification, $D_{50}$ may be defined as a particle diameter corresponding to 50% of a volume accumulation in a particle size distribution curve (a graph curve of a particle size distribution chart) of each particle. The $D_{50}$ may be measured using, for example, a laser diffraction method. Generally, a particle diameter in a range of a submicron region to about several mm may be measured and high reproducibility and high resolution results may be obtained, by the laser diffraction method.

The term "on" used in the present specification includes a case where a certain component is formed directly on the upper surface of another component, and a case where a third component is interposed between these components.

In the present specification, a crystallite size in a specific crystal plane of a positive electrode active material precursor particle is a value calculated by measuring an XRD pattern of a precursor by using an X-ray diffraction analyzer (Rikaku Corporation), obtaining a full width at half maximum intensity of a peak in the specific crystal plane from the measured XRD pattern, and using the Scherrer equation through ellipsoid modeling by using the full width at half maximum intensity of the peak.

Hereinafter, the present invention will be described in more detail.

## Positive electrode active material precursor

First, a positive electrode active material precursor according to the present invention will be described.

The present invention provides a positive electrode active material precursor including: a first region formed in the center of a particle of the positive electrode active material precursor and having a composition represented by Chemical Formula 1 or 2 below; and a second region formed on the first area and having a composition represented by Chemical Formula 3 or 4 below.

[Chemical Formula 1] $\qquad$ $[Ni_aCo_bM^1_c](OH)_2$

[Chemical Formula 2] $\qquad$ $[Ni_aCo_bM^1_c]O \cdot OH$

In Chemical Formulae 1 and 2, $M^1$ is at least one selected from the group consisting of B, Mg, Ca, Al, Ti, V, Cr, Fe, Zn, Ga, Y, Zr, Nb, Mo, Ta, and W, and $0<a<1$, $0<b<1$, $0 \leq c<0.5$, and $a+b+c=1$, and

[Chemical Formula 3] $\qquad$ $[Mn_dM^2_e](OH)_2$

[Chemical Formula 4] $\qquad$ $[Mn_dM^2_e]O \cdot OH$

In Chemical Formulae 3 and 4, $M^2$ is at least one selected from the group consisting of B, Mg, Ca, Al, Ti, V, Cr, Fe, Zn, Ga, Y, Zr, Nb, Mo, Ta, and W, and $0.5<d \leq 1$, $0<e<0.5$, and $d+e=1$.

That is, the present invention provides a positive electrode active material precursor in which a first region formed in the center of a particle of the positive electrode active material precursor and including a nickel cobalt-based composite metal hydroxide or oxyhydroxide and a second region formed on the first region and including a manganese-based metal hydroxide or oxyhydroxide are formed.

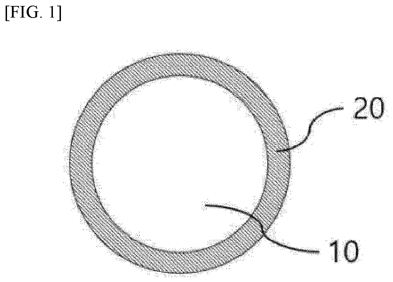

FIG. 1 illustrates an embodiment of a positive electrode active material precursor according to the present invention. Hereinafter, a positive electrode active material precursor according to the present invention will be described with reference to the drawings.

As shown in FIG. 1, the positive electrode active material precursor according to the present invention includes a first region 10 formed in the center of a precursor particle and a second region 20 formed on the first region 10, wherein the first region 10 includes nickel and cobalt as main components, and the second region 20 includes manganese as a main component.

The positive electrode active material precursor of the present invention includes a manganese-based metal hydroxide or oxyhydroxide region formed on the particle and having manganese as a main component, thereby obtaining an effect that high-temperature lifespan characteristics are further improved. This is because manganese has excellent characteristics in terms of thermal stability.

According to the present invention, a, b, and c refer to molar ratios of Ni, Co, and $M^1$, respectively, in a nickel cobalt-based composite metal hydroxide or oxyhydroxide particle (a particle having a composition represented by Chemical Formula 1 or 2), and a, b, and c may be, specifically, $0.6 \leq a<1$, $0<b<0.4$, and $0 \leq c<0.4$, and more specifically, $0.75 \leq a<1$, $0<b<0.25$, and $0 \leq c<0.25$.

According to the present invention, d and e refer to molar ratios of Mn and $M^2$, respectively, in a manganese-based composite metal hydroxide or oxyhydroxide particle (a particle having a composition represented by Chemical Formula 3 or 4), and d and e may be, specifically, $0.8<d \leq 1$ and $0 \leq e<0.2$, and more specifically, $0.9<d \leq 1$ and $0 \leq e<0.1$.

According to the present invention, the positive electrode active material precursor may include 60 mol% to 98 mol% of Ni, 1 mol% to 20 mol% of Co, and 1 mol% to 20 mol% of Mn among the total transition metals. Specifically, the positive electrode active material precursor may include 60 mol% to 90 mol% of Ni, 3 mol% to 20 mol% of Co, and 3 mol% to 20 mol% of Mn among the total transition metals. In this case, nickel, which has a high charge capacity and is cheaper than cobalt, accounts for more than half, and thus, has advantages in terms of low production costs and environmentally friendliness.

According to the present invention, an average particle diameter ($D_{50}$) of the positive electrode active material precursor may be 3 $\mu$m to 20 $\mu$m. The average particle diameter ($D_{50}$) of the positive electrode active material precursor may be, specifically, 3 $\mu$m to 15 $\mu$m, and more specifically, 4 $\mu$m to 12 $\mu$m. When an average particle diameter of the positive electrode active material precursor is within the above range, output characteristics may be improved by maintaining the mechanical strength and specific surface area of a positive electrode active material at a certain level without deterioration in dispersibility.

According to the present invention, a BET specific surface area of the positive electrode active material precursor may be 2 $m^2$/g to 20 $m^2$/g. The BET specific surface area of the positive electrode active material precursor may be, specifically, 2 $m^2$/g to 15 $m^2$/g, and more specifically, 2 $m^2$/g to 10 $m^2$/g. The BET specific surface area may be measured using the BELSORP-mino II apparatus of BEL Japan Inc., and when a BET specific surface area of the positive electrode active material precursor is within the above range, the capacity and lifespan of a battery using a positive electrode active material prepared from the positive electrode active material precursor may be excellent.

According to the present invention, a tap density of the positive electrode active material precursor may be 1.0 g/cc to 3.0 g/cc. The tap density of the positive electrode active material precursor may be, specifically, 1.5 g/cc to 2.5 g/cc, and more specifically, 1.5 g/cc to 2.0 g/cc. When a tap density of the positive electrode active material precursor is within the above range, a positive electrode with excellent energy density may be manufactured.

The tap density is a mass per volume of powder consisting of particles, and refers to a density in which voids between particles are filled by constant tapping or vibration. Factors affecting the tap density include particle size distribution, moisture content, particle shape, cohesiveness, and the like. The fluidity and compressibility of a material may be predicted through the tap density. The tap density may be measured based on ASTM D4781, and may be calculated using the equation TD=W/V (TD: tap density, W: sample weight (g), V: sample volume after tapping).

According to the present invention, a thickness of the second region may be 30 nm to 500 nm. The thickness of the second region may be, specifically, 30 nm to 400 nm, and more specifically, 50 nm to 350 nm. A thickness of the second region is determined by a ratio of Mn and $M^2$ among all metals, and when the thickness of the second region is within the above range, excellent capacity and an excellent lifespan may be achieved.

According to the present invention, the positive electrode active material precursor may satisfy the following Equation 1.

[Equation 1]

$$3.0 \leq C_{(100)}/C_{(001)} \leq 5.0$$

In Equation 1, $C_{(100)}$ refers to a crystallite size in a (100) plane, and $C_{(001)}$ refers to a crystallite size in a (001) plane.

The positive electrode active material precursor may satisfy, specifically, $3.0 \leq C(100)/C(001) \leq 4.5$, and more specifically, $3.0 \leq C(100)/C(001) \leq 4.0$. In this case, a size of a (001) crystal is minimized and a size of a (100) crystal that may act as a lithium path is dominant, such that it is possible to lower a temperature of calcination performed after mixing the positive electrode active material precursor with a lithium raw material in the future, and additionally, it is possible to provide a positive electrode active material having higher energy density and excellent cycle characteristics.

According to the present invention, the positive electrode active material precursor may have a crystallite size of 35 nm or more and 100 nm or less in the (100) plane. The crystallite size of the positive electrode active material precursor in the (100) plane may be, specifically, 35 nm or more and 50 nm or less. In this case, a size of the (100) crystal that may act as a lithium passage is dominant, and thus, a positive electrode active material having excellent cycle characteristics may be provided.

## Method of preparing positive electrode active material precursor

Next, a method of preparing a positive electrode active material precursor according to the present invention will be described.

A method of preparing a positive electrode active material precursor according to the present invention includes: a first step of forming a nickel cobalt-based composite metal hydroxide or oxyhydroxide particle through a precipitation reaction by mixing a first metal solution containing nickel and cobalt, an ammonium cation complex forming agent, and a basic compound; and a second step of forming a manganese-based metal hydroxide or oxyhydroxide on the nickel cobalt-based composite metal hydroxide or oxyhydroxide particle through a precipitation reaction by mixing a solution including the nickel cobalt-based composite metal hydroxide or oxyhydroxide particle with a second metal solution containing manganese, an ammonium cation complex forming agent, and a basic compound.

A method of preparing a positive electrode active material precursor according to the present invention is a method of preparing a positive electrode active material precursor in which a first region formed in the center of a particle of the positive electrode active material precursor and including a nickel cobalt-based composite metal hydroxide or oxyhydroxide and a second region formed on the first region and including a manganese-based metal hydroxide or oxyhydroxide are formed.

Hereinafter, each step of the present invention will be described in detail.

(1) First step

The first metal solution containing nickel and cobalt may be prepared by dissolving a nickel-containing raw material and a cobalt-containing raw material in a solvent such as water.

In this case, the nickel-containing raw material may be an acetate, carbonate, nitrate, sulfate, halide, sulfide, or oxide of nickel, and the cobalt-containing raw material may be an acetate, carbonate, nitrate, sulfate, halide, sulfide, or oxide of a cobalt metal.

The nickel-containing raw material may be, for example, but is not limited to, NiO, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a nickel halide, or a combination thereof.

The cobalt-containing raw material may be, for example, but is not limited to, $CoSO_4$, $Co(OCOCH_3)_2 \cdot 4H_2O$, $Co(NO_3)_2 \cdot 6H_2O$, $CoSO_4 \cdot 7H_2O$, or a combination thereof.

According to the present invention, the first metal solution may further contain a $M^1$ metal. In this case, the $M^1$ metal may be at least one selected from the group consisting of B, Mg, Ca, Al, Ti, V, Cr, Fe, Zn, Ga, Y, Zr, Nb, Mo, Ta, and W, and specifically Al.

A metal solution further including the $M^1$ metal may be prepared by dissolving a $M^1$ metal-containing raw material together with a nickel-containing raw material and a cobalt-containing raw material in a solvent.

In this case, the $M^1$ metal-containing raw material may be an acetate, carbonate, nitrate, sulfate, halide, sulfide, or oxide of a $M^1$ metal, and the $M^1$ metal may be included in an amount of 10 mol% or less, for example, 0.01 mol% to 10 mol%, 0.05 mol% to 10 mol%, or 1 mol% to 5 mol% among total metals in the first metal solution.

When the first metal solution is prepared, the first metal solution, an ammonium cation complex forming agent, and a basic compound are mixed to form a nickel cobalt-based composite metal hydroxide or oxyhydroxide particle through a precipitation reaction.

In this case, the ammonium cation complex forming agent may be at least one selected from the group consisting of $NH_4OH$, $(NH_4)_2SO_4$, $NH_4NO_3$, $NH_4Cl$, $CH_3COONH_4$, and $NH_4CO_3$, and the compound may be input into a reactor in the form of a solution dissolved in a solvent. In this case, as the solvent, water or a mixture of water and an organic solvent that is uniformly miscible with water (specifically, alcohol, etc.) may be used.

The basic compound may be at least one selected from the group consisting of NaOH, KOH, and $Ca(OH)_2$, and the compound may be input into a reactor in the form of a solution dissolved in a solvent. In this case, as the solvent, water or a mixture of water and an organic solvent that is uniformly miscible with water (specifically, alcohol, etc.) may be used.

The ammonium cation complex forming agent and the basic compound are input in an amount such that the pH of a reaction solution is in a desired range.

According to the present invention, in the first step, the first metal solution containing nickel and cobalt, the ammonium cation complex forming agent, and the basic compound may be mixed to form a nickel cobalt-based composite metal hydroxide or oxyhydroxide particle nucleus through a precipitation reaction in a range from pH 11.5 to pH 12.5, and specifically in a range from pH 11.8 to pH 12.3, and then, form the nickel cobalt-based composite metal hydroxide or oxyhydroxide particle through a precipitation reaction in a range from pH 11.0 to pH 12.0, and specifically in a range from pH 11.2 to pH 11.6. Meanwhile, a pH condition of a process of forming the particle may be lower than that of a process of forming the particle nucleus. When forming the nucleus and particle, when the precipitation reaction is performed in the each of the above pH ranges, there is an advantageous effect on nucleation and precursor growth (particle formation). Specifically, when the pH range is adjusted within the above ranges, particle growth by oriented attachment rather than particle growth by Ostwald ripening acts as a main mechanism to obtain a precursor grown in a preferred crystal direction ((100) or (101) direction). Meanwhile, when the size of a (001) crystal is minimized and the sizes of (100) and (101) crystals that may act as lithium passages are dominant, the temperature of calcination performed later may be lowered, and additionally, a positive electrode active material having higher energy density and excellent cycle characteristics may be provided.

That is, in the case of a positive electrode active material precursor prepared according to a method of the present invention, as growth of a (001) crystal is suppressed, the size of a (100) crystal is formed in a relatively dominant manner, and thus, Equation 1 described above may be satisfied.

**(2) Second step**

When nickel cobalt-based composite metal hydroxide or oxyhydroxide particles are sufficiently formed through the first step, the supply of the first metal solution is stopped, and a second metal solution containing manganese, an ammonium cation complex forming agent, and a basic compound are input to and mixed with a solution including the nickel cobalt-based composite metal hydroxide or oxyhydroxide particle, and through a precipitation reaction, a second region having a manganese-based metal hydroxide or oxyhydroxide composition is formed on the nickel cobalt-based composite metal hydroxide or oxyhydroxide particle.

The second metal solution containing manganese may be prepared by dissolving a manganese-containing raw material in a solvent such as water.

In this case, the manganese-containing raw material may be an acetate, carbonate, nitrate, sulfate, halide, sulfide, or oxide of manganese.

The manganese-containing raw material may be, for example, but is not limited to, $Mn_2O_3$, $MnO_2$, $Mn_3O_4$ $MnCO_3$, $Mn(NO_3)_2$, $MnSO_4$, manganese acetate, a manganese halide, or a combination thereof.

According to the present invention, the second metal solution may further contain a $M^2$ metal. In this case, the $M^2$ metal may be at least one selected from the group consisting of B, Mg, Ca, Al, Ti, V, Cr, Fe, Zn, Ga, Y, Zr, Nb, Mo, Ta, and W, and specifically Al.

A metal solution further including the $M^2$ metal may be prepared by dissolving a $M^2$ metal-containing raw material together with a nickel-containing raw material and a cobalt-containing raw material in a solvent.

In this case, the $M^2$ metal-containing raw material may be an acetate, carbonate, nitrate, sulfate, halide, sulfide, or oxide of a $M^2$ metal, and the $M^2$ metal may be included in an amount of 10 mol% or less, for example, 0.01 mol% to 10 mol%, 0.05 mol% to 10 mol%, or 1 mol% to 5 mol% among total metals in the second metal solution.

As the ammonium cation complex forming agent and the basic compound, the same materials as those described above may be used, and the ammonium cation complex forming agent and the basic compound are input in an amount such that the pH of a reaction solution is in a desired range.

According to the present invention, the second step may be performed in a range from pH 10.5 to pH 11.5. Specifically, the second step may be performed in a range from pH 10.7 to pH 11.2. Within the pH is adjusted within the above range, there is an advantageous effect in terms of controlling the precipitation reaction of the second step and controlling fine powder.

Through the method described above, a positive electrode active material precursor of the present invention having a novel structure including a nickel cobalt-based composite metal hydroxide or oxyhydroxide particle and a second region formed on the particle and having a manganese-based metal hydroxide or oxyhydroxide composition may be prepared.

**Positive electrode active material**

Next, a positive electrode active material according to the present invention will be described.

A positive electrode active material according to the present invention is a calcined product of a positive electrode active material precursor of the present invention and a lithium raw material.

The positive electrode active material may be prepared by mixing the positive electrode active material precursor of the present invention with the lithium raw material and then performing calcination thereon.

Examples of the lithium raw material include lithium-containing carbonates (e.g., lithium carbonate, etc.), hydrates (e.g., lithium hydroxide hydrate ($LiOH \cdot H_2O$), etc.), hydroxides (e.g., lithium hydroxide, etc.), nitrates (e.g., lithium nitrate ($LiNO_3$), etc.), chlorides (e.g., lithium chloride (LiCl), etc.), and the like, and one of them or a mixture of two or more thereof may be used.

Meanwhile, the mixing of the positive electrode active material precursor and the lithium raw material may be achieved through solid phase mixing, and a mixing ratio of the positive electrode active material precursor and the lithium raw material may be determined in a range that satisfies the atomic fraction of each component in a finally prepared positive electrode active material. For example, the positive electrode active material precursor and the lithium raw material may be mixed in an amount such that a molar ratio of a transition metal to Li is in a range from 1:0.9 to 1:1.2, and specifically in a range from 1:0.98 to 1:1.1. When the precursor and the lithium raw material are mixed in the above range, a positive electrode active material with excellent capacity characteristics may be prepared.

The calcination may be performed at 600 °C to 1,000 °C, and specifically at 700 °C to 900 °C, and the calcination time may be 5 hours to 30 hours, and specifically 8 hours to 15 hours, but is not limited thereto.

**Positive electrode**

Next, a positive electrode including the positive electrode active material of the present invention will be described.

The positive electrode includes a positive electrode current collector and a positive electrode active material layer formed on the positive electrode current collector, and the positive electrode active material layer includes the positive electrode active material according to the present invention.

The positive electrode active material has been described, and thus, a detailed description thereof will be omitted, and hereinafter, only the remaining components will be described in detail.

The positive electrode current collector may include a metal with high conductivity and allow the positive electrode active material layer to be easily adhered thereto, but is not particularly limited as long as it has no reactivity in a battery voltage range. As the positive electrode current collector, stainless steel, aluminum, nickel, titanium, calcined carbon, or aluminum or stainless steel that has been surface-treated with carbon, nickel, titanium, silver, or the like may be used. Also, the positive electrode current collector may typically have a thickness of 3 $\mu$m to 500 $\mu$m, and adhesion of the positive electrode active material may be increased by forming fine irregularities on a surface of the current collector. For example, the positive electrode current collector may be used in various forms such as a film, a sheet, a foil, a net, a porous body, a foam, or a non-woven body.

The positive electrode active material layer may optionally include a conductive material and a binder when needed, along with the positive electrode active material.

In this case, the positive electrode active material may be included in an amount ranging from 80 wt% to 99 wt%, and more specifically ranging from 85 wt% to 98.5 wt%, based on a total weight of the positive electrode active material layer. When the positive electrode active material is included in the above content range, excellent capacity characteristics may be exhibited.

The conductive material is used to impart conductivity to an electrode, and may be used without any particular limitation as long as it has electronic conductivity without causing chemical changes in a battery to be configured. Specific examples may include: graphite such as natural graphite or artificial graphite; carbon-based materials such as carbon black, acetylene black, ketjen black, channel black, furnace black, lamp black, thermal black, or carbon fiber; metal powders or metal fibers such as copper, nickel, aluminum, or silver; conductive tubes such as carbon nanotubes; conductive whiskers such as zinc oxide or potassium titanate; conductive metal oxides such as titanium oxide; or conductive polymers such as polyphenylene derivatives, and one of them or a mixture of two or more thereof may be used. The conductive material may be included in an amount ranging from 0.1 wt% to 15 wt%, based on a total weight of the positive electrode active material layer.

The binder serves to improve adhesion between positive electrode active material particles and adhesion between the positive electrode active material and the current collector. Specific examples may include polyvinylidene fluoride (PVDF), a polyvinylidene fluoridehexafluoropropylene copolymer (PVDF-co-HFP), polyvinyl alcohol, polyacrylonitrile, polymethymethacrylate, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), fluororubber, poly acrylic acid, and a polymer in which hydrogen is substituted with Li, Na, or Ca, or various copolymers thereof, and one of them or a mixture of two or more thereof may be used. The binder may be included in an amount ranging from 0.1 wt% to 15 wt%, based on a total weight of the positive electrode active material layer.

The positive electrode may be manufactured according to a typical positive electrode manufacturing method, except for using the positive electrode active material. Specifically, a composition for forming a positive electrode active material layer prepared by dissolving or dispersing the positive electrode active material and optionally a binder, a conductive material, and a dispersant when needed in a solvent is applied on a positive electrode current collector, followed by drying and roll-pressing, thereby manufacturing the positive electrode.

The solvent may be a solvent used generally in the related art and may include dimethyl sulfoxide (DMSO), isopropyl alcohol, N-methylpyrrolidone (NMP), dimethyl formamide (DMF), acetone, water, or the like, and one of them or a mixture of two or more thereof may be used. A usage amount of the solvent is sufficient to dissolve or disperse the positive electrode active material, the conductive material, the binder, and the dispersant, and to have a viscosity capable of exhibiting excellent thickness uniformity when applied for manufacturing a positive electrode thereafter, in consideration of a coating thickness of slurry and manufacturing yield.

Also, according to another method, the composition for forming a positive electrode active material layer is casted on a separate support, and then a film obtained by peeling from the support is laminated on a positive electrode current collector, thereby manufacturing the positive electrode.

**Electrochemical device**

Next, an electrochemical device including the positive electrode will be described.

The electrochemical device may be, specifically, a battery, a capacitor, or the like, and more specifically, a lithium secondary battery.

The lithium secondary battery may specifically include a positive electrode, a negative electrode facing the positive electrode, and a separator interposed between the positive electrode and the negative electrode, and an electrolyte, and because the positive electrode is the same as described above, a detailed description thereof will be omitted, and hereinafter, only the remaining components will be described in detail.

Also, the lithium secondary battery may optionally further include a battery container for accommodating an electrode assembly of the positive electrode, the negative electrode, and the separator, and a sealing member for sealing the battery container.

In the lithium secondary battery, the negative electrode includes a negative electrode current collector and a negative electrode active material layer located on the negative electrode current collector.

The negative electrode current collector is not particularly limited as long as it has high conductivity without causing a chemical change in a battery, and for example, copper, stainless steel, aluminum, nickel, titanium, calcined carbon, or copper or stainless steel that has been surface-treated with carbon, nickel, titanium, silver, or the like, an aluminum-cadmium alloy, or the like may be used. Also, the negative electrode current collector may typically have a thickness of 3 $\mu$m to 500 $\mu$m, and similar to the positive electrode current collector, the binding force of a negative electrode active material may be strengthened by forming fine irregularities on a surface of the current collector. For example, the negative electrode current collector may be used in various forms such as a film, a sheet, a foil, a net, a porous body, a foam, or a nonwoven body.

The negative electrode active material layer may optionally include a binder and a conductive material along with a negative electrode active material.

As the negative electrode active material, a compound capable of reversible intercalation and deintercalation of lithium may be used. Specific examples may include: carbonaceous materials such as artificial graphite, natural graphite, graphitized carbon fiber, or amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as $SiO_\beta$ ($0<\beta<2$), $SnO_2$, vanadium oxide, or lithium vanadium oxide; or a composite including the above-mentioned metallic compound and a carbonaceous material, such as a Si-C composite or a Sn-C composite, and any one of them or a mixture of two or more thereof may be used. Also, as the negative electrode active material, a metal lithium thin film may be used. Also, as a carbon material, both low-crystalline carbon and high-crystalline carbon may be used. Representative examples of the low-crystalline carbon include soft carbon and hard carbon, and representative examples of the high-crystalline carbon include amorphous, flake-like, scale-like, spherical, or fibrous natural or artificial graphite, Kish graphite, pyrolytic carbon, mesophase pitch based carbon fiber, meso-carbon microbeads, mesophase pitches, and petroleum or coal tar pitch derived cokes.

The negative electrode active material may be included in an amount ranging from 80 wt% to 99 wt%, based on a total weight of the negative electrode active material layer.

The binder is a component that assists bonding between the conductive material, the active material, and the current collector, and is typically added in an amount ranging from 0.1 wt% to 10 wt% based on a total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), nitrile-butadiene rubber, fluororubber, and various copolymers thereof.

The conductive material is a component for further improving conductivity of the negative electrode active material, and may be added in an amount of 10 wt% or less, and specifically 5 wt% or less, based on a total weight of the negative electrode active material layer. The conductive material is not particularly limited as long as it has conductivity without causing a chemical change in a battery, and for example, may include: graphite such as natural graphite or artificial graphite; carbon black such as acetylene black, ketjen black, channel black, furnace black, lamp black, or thermal black; conductive fibers such as carbon fiber or metal fiber; metal powders such as fluorinated carbon, aluminum, or nickel powder; conductive whiskers such as zinc oxide or potassium titanate; conductive metal oxides such as titanium oxides; conductive materials such as polyphenylene derivatives; or the like.

The negative electrode active material layer may be prepared by applying, on a negative electrode current collector, a composition for forming a negative electrode active material layer prepared by dissolving or dispersing a negative electrode active material and optionally a binder and a conductive material in a solvent and then drying the composition, or may be prepared by casting the composition for forming a negative electrode active material layer on a separate support and then laminating a film obtained by peeling from the support on the negative electrode current collector.

For example, the negative electrode active material layer may be prepared by applying, on a negative electrode current collector, a composition for forming a negative electrode active material layer prepared by dissolving or dispersing a negative electrode active material and optionally a binder and a conductive material in a solvent and then drying the composition, or by casting the composition for forming a negative electrode active material layer on a separate support and then laminating a film obtained by peeling from the support on the negative electrode current collector.

Meanwhile, in the lithium secondary battery, the separator separates the negative electrode and the positive electrode, provides a movement path of lithium ions, and may be any one that is used as a separator in a typical lithium secondary battery without particular limitation, and in particular, those with a low resistance to the movement of ions in an electrolyte and excellent electrolyte-retaining ability are preferable. Specifically, a porous polymer film, for example, a porous polymer film prepared with a polyolefin-based polymer such as an ethylene homopolymer, propylene homopolymer, ethylene/butene copolymer, ethylene/hexene copolymer, and ethylene/methacrylate copolymer, or a stacked structure of two or more layers thereof may be used. Also, a typical porous nonwoven fabric, for example, a nonwoven fabric including high-melting point glass fiber, polyethylene terephthalate fiber, or the like, may be used. Also, a coated separator including a ceramic component or a polymer material may be used to ensure heat resistance and mechanical strength, and may optionally be used in a single-layer or multilayer structure.

Also, examples of the electrolyte may include an organic-based liquid electrolyte, an inorganic-based liquid electrolyte, a solid polymer electrolyte, a gel-type polymer electrolyte, a solid inorganic electrolyte, and a melt-type inorganic electrolyte, which may be used in the manufacture of a lithium secondary battery, but is not limited thereto.

Specifically, the electrolyte may include an organic solvent and a lithium salt.

The organic solvent may be any one that may serve as a medium through which ions involved in an electrochemical reaction of a battery may move without particular limitation. Specifically, examples of the organic solvent may include: an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (where R is a $C_2$-$C_{20}$ linear, branched, or cyclic hydrocarbon group, and may include a double bond aromatic ring or ether bond); amides such as dimethyl formamide; dioxolanes such as 1,3-dioxolane; or sulfolanes. Among these, a carbonate-based solvent is preferable, and a mixture of a cyclic carbonate (for example, ethylene carbonate or propylene carbonate) with high ionic conductivity and a high dielectric constant capable of increasing the charge/discharge performance of a battery and a low-viscosity linear carbonate-based compound (for example, ethylmethyl carbonate, dimethyl carbonate, or diethyl carbonate) is further preferable. In this case, when a cyclic carbonate and a chain carbonate are mixed in a volume ratio of about 1:1 to about 1:9, the performance of the electrolyte may be excellent.

The lithium salt may be any compound capable of providing lithium ions used in a lithium secondary battery without particular limitation. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N'$, and examples of the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $Lil$, or $LiB(C_2O_4)_2$. A concentration of the lithium salt may be in a range from 0.1 M to 2.0 M. When a concentration of the lithium salt is within the above range, the electrolyte has appropriate conductivity and viscosity, and thus, may exhibit excellent electrolyte performance, and lithium ions may effectively move.

In addition to components of the electrolyte, the electrolyte may further include, for example, at least one additive such as haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidines, ethylene glycol dialkyl ether, ammonium salts, pyrrole, 2-methoxy ethanol, or aluminum trichloride in order to improve battery lifespan characteristics, suppress a reduction in battery capacity, or improve battery discharge capacity. In this case, the additive may be included in an amount of 0.1 wt% to 5 wt% based on a total weight of the electrolyte.

As described above, a lithium secondary battery including the positive electrode active material according to the present invention stably exhibits excellent discharge capacity, power characteristics, and lifespan characteristics, and thus, is useful in the field of portable devices such as mobile phones, laptops or digital cameras, electric vehicles such as hybrid electric vehicles (HEV), and the like.

Accordingly, a battery module including the lithium secondary battery as a unit cell and a battery pack including the battery module may be provided.

The battery module or the battery pack may be used as a power source for any one or more medium or large devices among: power tools; electric vehicles (EVs), hybrid electric vehicles, and plug-in hybrid electric vehicles (PHEVs); or power storage systems.

The external shape of the lithium secondary battery is not particularly limited, but may be a cylindrical shape using a can, a prismatic shape, a pouch shape, or a coin shape.

The lithium secondary battery may be used not only in a battery cell used as a power source for a small device, but also preferably used as a cell unit in a medium or large battery module including a plurality of battery cells.

Examples of the medium or large device may include, but are not limited to, electric vehicles, hybrid electric vehicles, plug-in hybrid electric vehicles, and power storage systems.

**Modes of the Invention**

Hereinafter, the present invention will be described in more detail through specific examples.

**Examples and Comparative Examples**

Example 1

$NiSO_4$ and $CoSO_4$ were input to distilled water in an amount such that a molar ratio of nickel:cobalt became 95:5 to thereby prepare a first metal solution having a concentration of 2.4 M. $MnSO_4$ was input to distilled water to thereby prepare a second metal solution having a concentration of 2.4 M. Also, a NaOH aqueous solution having a concentration of 8.0 M and an $NH_4OH$ aqueous solution having a concentration of 5.1 M were prepared.

13 L of deionized water, 0.013 L of the NaOH aqueous solution, and 0.64 L of the $NH_4OH$ aqueous solution were input into a batch reactor set at 50 °C and equipped with a pump and a filter, and then the reactor was purged with nitrogen gas to remove dissolved oxygen in the water, and a non-oxidizing atmosphere was established in the reactor.

The first metal solution, the NaOH aqueous solution, and the $NH_4OH$ aqueous solution were input at rates of 3.8 L/hr, 2.3 L/hr, and 0.54 L/hr, respectively, and stirred at a speed of 900 rpm for a precipitation reaction under pH 11.9 for 10 minutes, thereby forming a particle nucleus of a nickel cobalt-based composite metal hydroxide. Afterwards, the stirring speed was sequentially lowered, NaOH was input in a pH sensor-linked manner to adjust the pH of the reaction solution to pH 11.2 to pH 11.6, and then the first metal solution, the NaOH aqueous solution, and the $NH_4OH$ aqueous solution were input at rates of 3.8 L/hr, 2.3 L/hr, and 0.54 L/hr, respectively, and a precipitation reaction was carried out for 48 hours, thereby preparing a particle having a $Ni_{0.95}Co_{0.05}(OH)_2$ composition.

Afterwards, the input of the first metal solution was stopped, the pH of the reaction solution was adjusted to pH 10.7 to pH 11.2 by inputting NaOH in a pH sensor-linked manner, and then the second metal solution, the NaOH aqueous solution, and the $NH_4OH$ aqueous solution were input at rates of 3.8 L/hr, 2.3 L/hr, and 0.54 L/hr, respectively, and stirred at a speed of 150 rpm for a precipitation reaction for 4 hours, thereby preparing a positive electrode active material precursor in which a second region having a $Mn(OH)_2$ composition was formed on a first region formed in the center of a particle of the positive electrode active material precursor and having the $Ni_{0.95}Co_{0.05}(OH)_2$ composition.

In this case, the total transition metals included 88 mol% of Ni, 5 mol% of Co, and 7 mol% of Mn, a thickness of the second region was 120 nm, an average particle diameter ($D_{50}$) of the positive electrode active material precursor was 10 $\mu$m, a BET specific surface area was 9.48 $m^2$/g, and a tap density was 1.89 g/cc.

**Example 2**

A precursor was prepared in the same manner as in Example 1, except that $NiSO_4$ and $CoSO_4$ were input to distilled water in an amount such that a molar ratio of nickel: cobalt became 75:25 to thereby prepare a first metal solution having a concentration of 2.4 M, and the second metal solution, the NaOH aqueous solution, and the $NH_4OH$ aqueous solution were input at rates of 3.8 L/hr, 2.3 L/hr, and 0.54 L/hr, respectively, and stirred at a speed of 150 rpm for a precipitation reaction for 10 hours, thereby preparing a positive electrode active material precursor in which a second region having a $Mn(OH)_2$ composition was formed on a first region formed in the center of a particle of the positive electrode active material precursor and having a $Ni_{0.75}Co_{0.25}(OH)_2$ composition. In this case, the total transition metals included 60 mol% of Ni, 20 mol% of Co, and 20 mol% of Mn, a thickness of the second region was 350 nm, and an average particle diameter ($D_{50}$) of the positive electrode active material precursor was 10 $\mu$m.

**Example3**

$NiSO_4$ and $CoSO_4$ were input to distilled water in an amount such that a molar ratio of nickel:cobalt became 94:6 to thereby prepare a first metal solution having a concentration of 2.4 M. $MnSO_4$ was input to distilled water to thereby prepare a second metal solution having a concentration of 2.4 M. Also, a NaOH aqueous solution having a concentration of 8.0 M and an $NH_4OH$ aqueous solution having a concentration of 5.1 M were prepared.

13 L of deionized water, 0.066 L of the NaOH aqueous solution, and 0.51 L of the $NH_4OH$ aqueous solution were input into a batch reactor set at 50 °C and equipped with a pump and a filter, and then the reactor was purged with nitrogen gas to remove dissolved oxygen in the water, and a non-oxidizing atmosphere was established in the reactor.

The first metal solution, the NaOH aqueous solution, and the NH$_4$OH aqueous solution were input at rates of 3.8 L/hr, 2.3 L/hr, and 0.54 L/hr, respectively, and stirred at a speed of 900 rpm for a precipitation reaction under pH 12.2 for 10 minutes, thereby forming a particle nucleus of a nickel cobalt-based composite metal hydroxide. Afterwards, the stirring speed was sequentially lowered, NaOH was input in a pH sensor-linked manner to adjust the pH of the reaction solution to pH 11.4 to pH 11.8, and then the first metal solution, the NaOH aqueous solution, and the NH$_4$OH aqueous solution were input at rates of 3.8 L/hr, 2.3 L/hr, and 0.54 L/hr, respectively, and a precipitation reaction was carried out for 21 hours, thereby preparing a particle having a Ni$_{0.94}$Co$_{0.06}$(OH)$_2$ composition.

Afterwards, the input of the first metal solution was stopped, the pH of the reaction solution was adjusted to pH 10.7 to pH 11.2 by inputting NaOH in a pH sensor-linked manner, and then the second metal solution, the NaOH aqueous solution, and the NH$_4$OH aqueous solution were input at rates of 3.8 L/hr, 2.3 L/hr, and 0.54 L/hr, respectively, and stirred at a speed of 150 rpm for a precipitation reaction for 3 hours, thereby preparing a positive electrode active material precursor in which a second region having a Mn(OH)$_2$ composition was formed on a first region formed in the center of a particle of the positive electrode active material precursor and having the Ni$_{0.94}$Co$_{0.06}$(OH)$_2$ composition.

In this case, the total transition metals included 83 mol% of Ni, 5 mol% of Co, and 12 mol% of Mn, a thickness of the second region was 100 nm, an average particle diameter (D$_{50}$) of the positive electrode active material precursor was 4.8 μm, a BET specific surface area was 2.50 m$^2$/g, and a tap density was 1.64 g/cc.

**Comparative Example 1**

NiSO$_4$, CoSO$_4$, and MnSO$_4$ were mixed in distilled water in an amount such that a molar ratio of nickel:cobalt:manganese became 88:5:7, thereby preparing a metal solution having a concentration of 2.4 M. Also, a NaOH aqueous solution having a concentration of 8.0 M and an NH$_4$OH aqueous solution having a concentration of 5.1 M were prepared.

13 L of deionized water, 0.013 L of the NaOH aqueous solution, and 0.64 L of the NH$_4$OH aqueous solution were input into a batch reactor set at 50 °C and equipped with a pump and a filter, and then the reactor was purged with nitrogen gas to remove dissolved oxygen in the water, and a non-oxidizing atmosphere was established in the reactor.

The metal solution, the NaOH aqueous solution, and the NH$_4$OH aqueous solution were input at rates of 3.8 L/hr, 2.3 L/hr, and 0.54 L/hr, respectively, and stirred at a speed of 900 rpm for a precipitation reaction under pH 11.9 for 10 minutes, thereby forming a particle nucleus of a nickel manganese cobalt-based composite metal hydroxide. Afterwards, the stirring speed was sequentially lowered, NaOH was input in a pH sensor-linked manner to adjust the pH of the reaction solution to pH 11.2 to pH 11.6, and then the metal solution, the NaOH aqueous solution, and the NH$_4$OH aqueous solution were input at rates of 3.8 L/hr, 2.3 L/hr, and 0.54 L/hr, respectively, and a precipitation reaction was carried out for 48 hours, thereby preparing a positive electrode active material precursor having a Ni$_{0.88}$Co$_{0.05}$Mn$_{0.07}$(OH)$_2$ composition (a uniform composition throughout the positive electrode active material precursor).

In this case, the total transition metals included 88 mol% of Ni, 5 mol% of Co, and 7 mol% of Mn, an average particle diameter (D$_{50}$) of the positive electrode active material precursor was 10 μm, a BET specific surface area was 5.17 m$^2$/g, and a tap density was 1.98 g/cc.

**Experimental Examples**

Experimental Example 1: Precursor analysis

<SEM/EDS analysis>

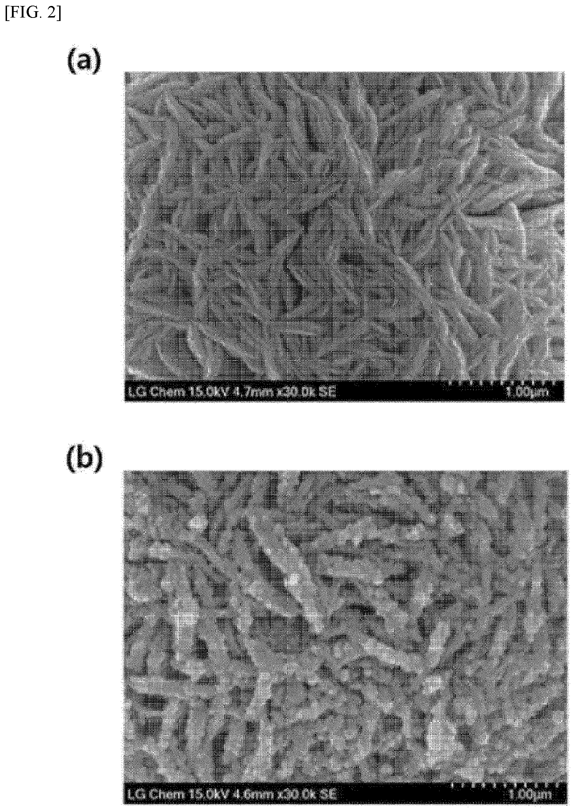

In Example 1, an SEM image of the particle having the Ni$_{0.95}$Co$_{0.05}$(OH)$_2$ composition was measured and is shown in FIG. 2(a), and an SEM image of the positive electrode active material precursor in which the second region having the Mn(OH)$_2$ composition was formed is shown in FIG. 2(b).

Also, an SEM/EDS analysis was performed in order to identify the distribution of metal elements inside and on the surface of the positive electrode active material precursors of Examples 1 to 3, and the results thereof are shown in Table 1 below.

[Table 1]

| atomic% | Example 1 | | Example 2 | | Comparative Example 1 | |
|---|---|---|---|---|---|---|
| | Interior | Surface | Interior | Surface | Interior | Surface |
| Ni | 94.6 | 1.1 | 74.8 | 0.4 | 87.9 | 87.7 |

(continued)

| atomic% | Example 1 | | Example 2 | | Comparative Example 1 | |
|---|---|---|---|---|---|---|
| | Interior | Surface | Interior | Surface | Interior | Surface |
| Co | 5.4 | 0.3 | 25.2 | 0.1 | 5.1 | 5.2 |
| Mn | 0 | 98.6 | 0 | 99.5 | 7.0 | 7.1 |
| Total | 100 | 100 | 100 | 100 | 100 | 100 |

Referring to FIG. 2, it may be confirmed that a positive electrode active material precursor according to the present invention includes a second region that is formed on a particle (a first region) having a $Ni_{0.95}Co_{0.05}(OH)_2$ composition and has a $Mn(OH)_2$ composition.

Referring to Table 1, it may be confirmed that the precursors of Examples 1 and 2, which are positive electrode active material precursors according to the present invention, include Mn distributed only on the surface of the particle, whereas the precursor of Comparative Example 1 includes Mn even inside the particle, similar to the composition of the surface.

<XRD analysis>

Crystallite sizes of positive electrode active material precursor particles prepared in Examples 1 and 3 and Comparative Example 1 were obtained through the following method.

Specifically, an XRD pattern of a precursor was measured using an X-ray diffraction analyzer (Rikaku Corporation). After a half width of a peak for each crystal plane was obtained from the measured XRD pattern, a crystallite size ($C_{(100)}$) in a (100) plane and a crystallite size ($C_{(001)}$) in a (001) plane of the precursor were calculated using the Scherrer equation through ellipsoid modeling, and values of $C_{(100)}$, $C_{(001)}$, and $C_{(100)}/C_{(001)}$ are shown in Table 2 below.

[Table 2]

| | Example 1 | Example 3 | Comparative Example 1 |
|---|---|---|---|
| $C_{(100)}$ (nm) | 40.6 | 40.7 | 28.5 |
| $C_{(001)}$ (nm) | 11.7 | 12.6 | 11.5 |
| $C_{(100)}/C_{(001)}$ | 3.48 | 3.23 | 2.48 |

As shown in Table 2, it was confirmed that the growth of the (100) crystal plane of each of the positive electrode active material precursors prepared in Examples 1 and 3 was greater than that of the positive electrode active material precursor prepared in Comparative Example 1.

**Experimental Example 2: Battery performance evaluation**

The positive electrode active material precursor in Example 1 and $LiOH \cdot H_2O$ were mixed so that a molar ratio of Li:transition metal was 1.05:1, and calcined for 13 hours at 805 °C in an oxygen atmosphere, thereby preparing a positive electrode active material from the positive electrode active material precursor of Example 1.

A positive electrode active material was prepared from the positive electrode active material precursor of Comparative Example 1 in the same manner as described above, except that the calcination temperature was 765 °C.

As described above, a prepared positive electrode active material, conductive material (carbon black), and binder (PVdF) were mixed in a N-methyl-2-pyrrolidone (NMP) solvent in a weight ratio of 97.5:1:1.5, thereby preparing a positive electrode slurry. The positive electrode slurry was applied on one surface of an aluminum current collector, dried at 130 °C, and then roll-pressed to have a porosity of 24%, thereby manufacturing each positive electrode.

A 2032 standard coin cell-type lithium secondary battery was manufactured with each positive electrode, and the performance of each lithium secondary battery was evaluated. In this case, a lithium (Li) metal disk was used as a negative electrode, a separator was interposed between the positive electrode and the negative electrode to prepare an electrode assembly, which was then placed in a battery case, and then an electrolyte was injected into the case, thereby manufacturing a lithium secondary battery. In this case, as the electrolyte, an electrolyte in which 1M $LiPF_6$ was dissolved in an organic solvent obtained by mixing ethylene carbonate:ethylmethyl carbonate:diethyl carbonate in a volume ratio of 3:3:4 was used.

With respect to each of the manufactured lithium secondary batteries, after a CC/CV mode charging was carried out up to 4.25 V with a 0.1 C constant current at 25 °C (CV 0.05 C), a CC mode discharging was carried out until 3 V, thereby measuring an initial charge capacity and discharge capacity, and results thereof are shown in Table 3 below.

[Table 3]

| | Charge capacity (mAh/g) | Discharge capacity (mAh/g) |
|---|---|---|
| Example 1 | 234 | 214 |
| Comparative Example 1 | 230 | 211 |

Referring to Table 3, it may be confirmed that a lithium secondary battery including a positive electrode active material prepared from a positive electrode active material precursor according to the present invention has improved charge capacity and improved discharge capacity.

[Description of reference numerals]

10: First region
20: Second region

## Claims

1. A positive electrode active material precursor comprising:

   a first region formed in a center of a particle of the positive electrode active material precursor and having a composition represented by Chemical Formula 1 or 2 below; and
   a second region formed on the first region and having a composition represented by Chemical Formula 3 or 4:

   [Chemical Formula 1] $[Ni_aCo_bM^1_c](OH)_2$

   [Chemical Formula 2] $[Ni_aCo_bM^1_c]O·OH$

   wherein, in Chemical Formulae 1 and 2, $M^1$ is at least one selected from the group consisting of B, Mg, Ca, Al, Ti, V, Cr, Fe, Zn, Ga, Y, Zr, Nb, Mo, Ta, and W, and $0<a<1$, $0<b<1$, $0\leq c<0.5$, and $a+b+c=1$, and

   [Chemical Formula 3] $[Mn_dM^2_e](OH)_2$

   [Chemical Formula 4] $[Mn_dM^2_e]O·OH$

   wherein, in Chemical Formulae 3 and 4, $M^2$ is at least one selected from the group consisting of B, Mg, Ca, Al, Ti, V, Cr, Fe, Zn, Ga, Y, Zr, Nb, Mo, Ta, and W, and $0.5<d\leq1$, $0\leq e<0.5$, and $d+e=1$.

2. The positive electrode active material precursor of claim 1,

   wherein, in Chemical Formulae 1 and 2,
   $0.6\leq a<1$, $0<b<0.4$, and $0\leq c<0.4$, and
   in Chemical Formulae 3 and 4,
   $0.8<d\leq1$ and $0\leq e<0.2$.

3. The positive electrode active material precursor of claim 1,

   wherein, in Chemical Formulae 1 and 2,
   $0.75\leq a<1$, $0<b<0.25$, and $0\leq c<0.25$, and
   in Chemical Formulae 3 and 4,
   $0.9<d\leq1$ and $0\leq e<0.1$.

4. The positive electrode active material precursor of claim 1, wherein the positive electrode active material precursor includes 60 mol% to 98 mol% of Ni, 1 mol% to 20 mol% of Co, and 1 mol% to 20 mol% of Mn with respect to total transition metals.

5. The positive electrode active material precursor of claim 1, wherein an average particle diameter ($D_{50}$) of the positive electrode active material precursor is 3 $\mu$m to 20 $\mu$m.

6. The positive electrode active material precursor of claim 1, wherein a thickness of the second region is 30 nm to 500 nm.

7. The positive electrode active material precursor of claim 1, wherein a BET specific surface area of the positive electrode active material precursor is 2 $m^2$/g to 20 $m^2$/g.

8. The positive electrode active material precursor of claim 1, wherein a tap density of the positive electrode active material precursor is 1.0 g/cc to 3.0 g/cc.

9. The positive electrode active material precursor of claim 1, wherein the positive electrode active material precursor satisfies Equation 1 below:

[Equation 1]

$$3.0 \leq C_{(100)}/C_{(001)} \leq 5.0$$

wherein, in Equation 1, $C_{(100)}$ refers to a crystallite size in a (100) plane, and $C_{(001)}$ refers to a crystallite size in a (001) plane.

10. The positive electrode active material precursor of claim 1, wherein a crystallite size of the positive electrode active material precursor in a (100) plane is 35 nm or more and 100 nm or less.

11. A method of preparing the positive electrode active material precursor of claim 1, the method comprising:

a first step of mixing a first metal solution containing nickel and cobalt, an ammonium cation complex forming agent, and a basic compound to form a nickel cobalt-based composite metal hydroxide or oxyhydroxide particle through a precipitation reaction; and
a second step of forming a manganese-based metal hydroxide or oxyhydroxide on the nickel cobalt-based composite metal hydroxide or oxyhydroxide particle through a precipitation reaction by mixing a solution including the nickel cobalt-based composite metal hydroxide or oxyhydroxide particle with a second metal solution containing manganese, an ammonium cation complex forming agent, and a basic compound.

12. The method of claim 11, wherein, in the first step, the first metal solution containing nickel and cobalt, the ammonium cation complex forming agent, and the basic compound are mixed to form a nickel cobalt-based composite metal hydroxide or oxyhydroxide particle nucleus through a precipitation reaction in a range from pH 11.5 to pH 12.5, and then, grow the nickel cobalt-based composite metal hydroxide or oxyhydroxide particle through a precipitation reaction in a range from pH 11.0 to pH 12.0.

13. The method of claim 11, wherein the second step is performed in a range from pH 10.5 to pH 11.5.

14. The method of claim 11, wherein the first metal solution further comprises a $M^1$ metal, and
the $M^1$ metal is at least one selected from the group consisting of B, Mg, Ca, Al, Ti, V, Cr, Fe, Zn, Ga, Y, Zr, Nb, Mo, Ta, and W.

15. The method of claim 11, wherein the second metal solution further comprises a $M^2$ metal, and
the $M^2$ metal is at least one selected from the group consisting of B, Mg, Ca, Al, Ti, V, Cr, Fe, Zn, Ga, Y, Zr, Nb, Mo, Ta, and W.

16. A positive electrode active material which is a calcined product of the positive electrode active material precursor according to any one of claims 1 to 10 and a lithium raw material.

[FIG. 1]

[FIG. 2]

**(a)**

LG Chem 15.0kV 4.7mm x30.0k SE    1.00µm

**(b)**

LG Chem 15.0kV 4.6mm x30.0k SE    1.00µm

## INTERNATIONAL SEARCH REPORT

| International application No. |
| --- |
| **PCT/KR2021/009609** |

| A. | CLASSIFICATION OF SUBJECT MATTER |
| --- | --- |

**H01M 4/525**(2010.01)i; **H01M 4/505**(2010.01)i; **C01G 53/00**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 10/0525(2010.01); H01M 4/131(2010.01); H01M 4/48(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 니켈(nickel), 코발트(cobalt), 침전 반응(precipitation), 망간(manganese)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 102456877 B (BYD CO., LTD.) 30 April 2014 (2014-04-30)<br>See claims 1 and 2; and paragraphs [0030], [0038], [0042] and [0060]-[0068]. | 1-11,13,16 |
| Y | | 12,14-15 |
| Y | KR 10-2017-0103699 A (LG CHEM, LTD.) 13 September 2017 (2017-09-13)<br>See claim 16; and paragraphs [0055]-[0058] and [0186]-[0197]. | 12,14-15 |
| A | KR 10-2012-0009779 A (ECOPRO CO., LTD.) 02 February 2012 (2012-02-02)<br>See entire document. | 1-16 |
| A | KR 10-1905362 B1 (CHUNG ANG UNIVERSITY INDUSTRY ACADEMIC COOPERATION FOUNDATION) 05 October 2018 (2018-10-05)<br>See entire document. | 1-16 |

| ☑ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **08 December 2021** | **08 December 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/009609**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2019-0052184 A (ILJIN MATERIALS CO., LTD.) 16 May 2019 (2019-05-16)<br>See entire document. | 1-16 |

Form PCT/ISA/210 (second sheet) (July 2019)

| INTERNATIONAL SEARCH REPORT | International application No. |
| Information on patent family members | PCT/KR2021/009609 |

| Patent document cited in search report | | | Publication date (day/month/year) | Patent family member(s) | | | Publication date (day/month/year) |
|---|---|---|---|---|---|---|---|
| CN | 102456877 | B | 30 April 2014 | CN | 102456877 | A | 16 May 2012 |
| KR | 10-2017-0103699 | A | 13 September 2017 | CN | 108028369 | A | 11 May 2018 |
| | | | | CN | 108028369 | B | 17 November 2020 |
| | | | | EP | 3425703 | A1 | 09 January 2019 |
| | | | | EP | 3425703 | B1 | 11 September 2019 |
| | | | | JP | 2018-531500 | A | 25 October 2018 |
| | | | | JP | 6723545 | B2 | 15 July 2020 |
| | | | | KR | 10-1949249 | B1 | 19 February 2019 |
| | | | | US | 10535873 | B2 | 14 January 2020 |
| | | | | US | 2018-0212237 | A1 | 26 July 2018 |
| KR | 10-2012-0009779 | A | 02 February 2012 | KR | 10-1313575 | B1 | 02 October 2013 |
| | | | | WO | 2012-011760 | A2 | 26 January 2012 |
| | | | | WO | 2012-011760 | A3 | 31 May 2012 |
| KR | 10-1905362 | B1 | 05 October 2018 | WO | 2019-203432 | A1 | 24 October 2019 |
| KR | 10-2019-0052184 | A | 16 May 2019 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200092347